# EUROPÄISCHE PATENTSCHRIFT

(11) **EP 3 088 115 B1**
(45) Veröffentlichungstag und Bekanntmachung des Hinweises auf die Patenterteilung: **03.04.2019**
(21) Anmeldenummer: 16000951.0
(22) Anmeldetag: 27.04.2016
(51) Int. Cl.: B23H 3/10, B23H 9/14

(54) **VERFAHREN ZUR HERSTELLUNG EINES WERKSTÜCKS**
METHOD FOR PRODUCING A WORKPIECE
PROCEDE DE FABRICATION D'UNE PIECES USINEE

(30) Priorität: 27.04.2015 DE 102015106432
(43) Veröffentlichungstag der Anmeldung: 02.11.2016
(73) Patentinhaber: Gramm Technik GmbH, 71254 Ditzingen-Heimerdingen (DE)
(72) Erfinder: Gramm, Gerhard, 88637 Leibertingen (DE)
(74) Vertreter: Jeck, Anton

(56) Entgegenhaltungen:
- WO-A1-01/38030
- DE-A1- 1 959 852
- US-A- 3 254 013
- US-A- 3 547 798
- DATABASE WPI Week 201014 Thomson Scientific, London, GB; AN 2010-B49701 XP002761505, & CN 101 633 066 A (UNIV NANJING AERONAUTICS & ASTRONAUTICS) 27. Januar 2010 (2010-01-27)

## Beschreibung

Die Erfindung betrifft ein Verfahren gemäß dem Oberbegriff des Anspruchs 1.

DIN 8590 unterscheidet thermisches, chemisches und elektrochemisches Abtragen.

Beim auch als ECM (Electro Chemical Machining) bezeichneten elektrochemischen Abtragen handelt es sich um ein abtragendes Fertigungsverfahren, insbesondere für sehr harte Werkstoffe. Das dem Trennen zugeordnete elektrochemische Abtragen Ist geeignet für einfache Entgratarbeiten bis hin zur Herstellung komplizierter räumlicher Formen.

Weiterentwicklungen des ECM sind das PECM (Pulsed Electrochemical Machining) und das PEM (Precise Electrochemical Machining), wobei mit letzterem eine Präzision im Mikrometerbereich und somit Mikrobearbeltungen möglich sind.

Im Folgenden wird der Einfachheit halber nicht zwischen ECM, PECM und PEM unterschieden und statt dessen einheitlich der Begriff elektrochemisches Abtragen stellvertretend für alle drei Ausgestaltungen verwendet, es sei denn, es ist explizit etwas anderes erwähnt.

Elektrochemisches Abtragen erfolgt berührungsfrei ohne mechanischen Kontakt zwischen Werkzeug und Werkstück. Somit werden keine mechanischen Kräfte übertragen und Werkstoffeigenschaften, wie Härte oder Zähigkeit, nehmen keinen Einfluss auf den Prozess. Von Bedeutung sind jedoch Eigenschaften, wie Schmelzpunkt, Wärme- und elektrische Leitfähigkeit des Ausgangsmaterials.

Das Werkstück wird positiv als Anode und das Werkzeug negativ als Kathode polarisiert. In den meisten Anwendungsfällen dient eine äußere Spannungsquelle der Erzeugung eines zum elektrochemischen Abtragen erforderlichen Stromflusses.

In Sonderanwendungen, wie in der Metallographie zum Sichtbarmachen der Gefügestruktur, wird auf das elektrochemische Ätzen zurückgegriffen, bei dem eine Potentialdifferenz im beispielsweise durch Lokalelemente gebildeten Mikrobereich als innere Spannungsquelle dient, um den gewünschten Materialabtrag zu erreichen.

Die Form des als Kathode gepolten Werkzeugs gibt die Form des Werkstücks vor. Beim elektrochemischen Abtragen handelt es sich dadurch um ein abbildendes Verfahren. Am Werkzeug findet prozessbedingt kein Verschleiß statt. Zwischen Werkzeug und Werkstück muss in Abhängigkeit von den elektrischen Parametern und von den Strömungsverhältnissen des Elektrolyts ein Spalt eingestellt werden. Die Spaltweite beträgt 0,05 mm bis 1 mm.

Den Ladungstransport im Arbeitsspalt übernimmt eine Elektrolytlösung, wie etwa eine wässrige Lösung von Natriumchlorid (NaCl, Kochsalzlösung) oder Natriumnitrat (NaNO₃). Der entstehende Elektronenstrom löst Metallionen vom Werkstück. Die gelösten Metallionen gehen dann an der Anode Reaktionen mit Teilen des gespaltenen Elektrolyts ein. An der Kathode reagiert der Elektrolytrest mit Wasser. Als Endprodukt fällt Metallhydroxid an, welches sich als Schlamm absetzt und entfernt werden muss.

Wegen der Abhängigkeit des Spalts zwischen der Anode und der Kathode von elektrischen und strömungsmechanischen Bedingungen ist eine Vorausberechnung der Form der Kathode schwierig.

Die erzielbaren Oberflächengüten liegen bei Rz = 3 µm bis 10 µm. Die Randzonen werden nicht beeinflusst. Damit stellt das elektrochemische Abtragen das einzige trennende Verfahren ohne Randzoneneinfluss dar. Der spezifische Abtrag beträgt 1 - 2,5 mm³/A.min. Die Senkgeschwindigkeit ist variabel und liegt zwischen 0 und bis zu 20 mm/min.

Der Elektrolyt kann durch Zentrifugieren aufbereitet werden, um die Metallhydroxide von der Elektrolytlösung zu trennen. Der anfallende Schlamm wird mit Filterpressen weiter entwässert, um dann als Sondermüll entsorgt zu werden.

Bekannt ist, ein Ausgangsmaterial aus Metall elektrochemisch mittels einer kurz als Elektrolyt bezeichneten elektrisch leitenden Flüssigkeit In einem offenen System unter Hochdruck abzutragen. Hierbei ist in einem der elektrochemischen Abtragung dienenden Stromkreis das Ausgangsmaterial als Anode und eine als Werkzeug dienende Elektrode als Kathode gepolt angeschlossen.

Durch die DE 30 30 664 A1 ist bekannt, vermittels elektrochemischer Reaktion ein als Elektrode gepoltes Ausgangsmaterial abzutragen.

Durch die DE 31 25 565 A1 ist ein elektrochemisches, galvanisches oder elektrolytisches Abtragen von Metallüberzügen von leitfähigen Substraten bekannt.

Durch die DE 10 2012 110 016 A1 ist ein Verfahren zum Herstellen mindestens einer Vertiefung mit einer Hinterschneidung in einem elektrisch leitfähigen Körper bekannt. Dabei wird eine plättchenförmige Elektrode in den Körper bewegt. Es erfolgt ein erstes elektrochemisches Abtragen von Material aus dem Körper während des Bewegens der Elektrode in einem ersten Bewegungsabschnitt, wobei das Abtragen im Wesentlichen bis zu einem ersten Abstand um die Elektrode unter Zufuhr eines Stroms erster Stromstärke erfolgt. Anschließend erfolgt ein zweites elektrochemisches Abtragen von Material aus dem Körper während des Bewegens der Elektrode in einem von dem ersten verschiedenen zweiten Bewegungsabschnitt, wobei das zweite Abtragen im Wesentlichen in einem gegenüber dem ersten größeren zweiten Abstand um die Elektrode unter Zufuhr eines Stroms mit einer gegenüber der ersten größeren zweiten Stromstärke erfolgt.

Durch die DE 10 2011 122 523 A1 ist eine Elektrode zum elektrochemischen Abtragen bekannt. Die Elektrode umfasst einen Elektrodenkörper, auf dem elektrisch leitende Strukturen angeordnet sind, die jeweils durch eine elektrisch Isolierende Schicht voneinander getrennt sind. Der Elektrodenkörper besteht aus mindestens zwei elektrisch leitfähigen Bauteilen, zwischen denen ein elektrisch isolierendes Bauteil angeordnet ist.

Durch DE 100 28 675 A1 ist bekannt, auf eine Druckkammer beim elektrochemischen Abtragen eines einen durch elektrochemisches Abtragen zu behandelnden zentralen Hohlraum aufweisenden Werkstücks unter den Bedingungen zu verzichten, dass in dem zentralen Hohlraum oder in einem zwischen Werkstück und Abdeckung ausgebildeten Hohlraum ein Unterdruck hergestellt wird, und dass das Werkzeug von Luft umgeben ist. Hierbei kann der Unterdruck durch Absaugen von Luft aus dem Hohlraum oder durch Absaugen von Elektrolyt aus der Ablaufleitung hergestellt werden.

Durch DE 22 34 424 A ist bekannt, zur kontinuierlichen elektrochemischen Behandlung eines Metallbands, bei welcher das Metallband in einer horizontalen Ebene durch einen in einem Behandlungsraum befindlichen Elektrolyt geführt wird, das Ausfließen des Elektrolyts aus den Ein- und Austrittsöffnungen für das Metallband durch Erzeugung eines Unterdrucks über der Oberfläche des Elektrolyts zu verhindern.

Durch DE 10 2006 034 277 A1 ist bekannt, zur elektrochemischen Oberflächenbehandlung eines Werkstücks einen zwischen dem Werkstück und einem dieses zumindest teilweise umgebenden Mantel ausgebildeten Behandlungsraum vorzusehen. Der mindestens einen Teil des Werkstücks aufnehmende Mantel ist mit mindestens einem Querschnitt des Werkstücks komplementär, wobei die Innenabmessungen des Mantels in alen Richtungen gleichermaßen geringfügig größer sind als die Außenabmessungen des entsprechenden Querschnitts des Werkstücks. In dem Behandlungsraum kann während der Oberflächenbehandlung des Werkstücks Unterdruck gegenüber der Umgebung herrschen.

Durch DE 10 2007 049 495 A1 ist bekannt, bei der elektrochemischen Abtragung eines Werkstücks in einem Behandlungsraum in den Elektrolyt gelangte Schwebstoffe mittels einer Filteranlage herauszufiltern, bevor das Elektrolyt erneut dem Behandlungsraum zugeführt wird.

Durch US 3,547,798 ist ein Verfahren zur Herstellung eines Werkstücks durch elektrochemisches Abtragen eines Ausgangsmaterials bekannt. Das Verfahren sieht eine Ausbildung eines Reaktorraums zwischen einer bis dato ausgebildeten Oberfläche des Ausgangsmaterials, einer hohlzylinderförmigen Reaktorhülse und einem in der Reaktorhülse beweglich geführt angeordneten Werkzeug vor. Ein in der Reaktorhülse beweglich geführt angeordnetes Werkzeug wird während des elektrochemischen Abtragens in gleichbleibendem Abstand zur mit zunehmendem elektrochemischen Abtragen zurückweichenden Oberfläche des Ausgangsmaterials geführt.

Durch US 3,254,013 ist eine Vorrichtung zur Herstellung eines Werkstücks durch elektrochemisches Abtragen eines Ausgangsmaterials und ein Verfahren gemäß dem Oberbegriff des Anspruchs 1 bekannt. Die Vorrichtung umfasst ein Werkzeug mit einem zentralen Elektrolytauslass, das auf seiner dem zu behandelnden Ausgangsmaterial zugewandten Seite eine Bearbeitungsspitze aufweist. Die Vorrichtung umfasst eine hohlzylinderförmige Reaktorhülse, in welcher das Werkzeug unter Einhaltung eines konstanten Abstands gegenüberliegend zu einer bis dato ausgebildeten Oberfläche des Ausgangsmaterials relativbeweglich geführt angeordnet ist. Die Vorrichtung umfasst ferner einen zwischen der Reaktorhülse, dem Werkzeug und dem Ausgangsmaterial ausgebildeten Reaktorraum mit einer Einlassöffnung und einer Auslassöffnung. Ein Elektrolyt strömt unter Druck durch die Einlassöffnung in den Reaktorraum hinein und durch die Auslassöffnung wieder aus dem Reaktorraum heraus.

Um auf eine Druckkammer verzichten zu können ist durch WO 01/38030 A1 in Verbindung mit einem Verfahren zur Herstellung eines Werkstücks durch elektrochemisches Abtragen eines Ausgangsmaterials bekannt, dass das Werkstück von einem in einem Hohlraum des Werkstücks oder einem zwischen dem Werkstück und einer Abdeckung gebildeten Hohlraum einen Unterdruck herzustellen. Das Werkstück ist von Luft umgeben und der Unterdruck wird durch Absaugen von Luft aus dem Hohlraum hergestellt. Der Unterdruck kann aber bei dem von Luft umgebenen Werkstück auch durch Absaugen von Elektrolyt aus der Ablaufleitung erzeugt und somit ein Differenzdruck hergestellt werden.

Durch CN 101 633 066 A ist in Verbindung mit einem Verfahren zur Herstellung eines Werkstücks durch elektrochemisches Abtragen eines Ausgangsmaterials bekannt, Elektrolyt mittels einer Saugpumpe aus einem gegenüber der Umgebung offenen Elektrolytbad abzusaugen und einem Tank zuzuführen. Zur Ersetzung der entnommenen Elektrolytmenge wird mittels einer separaten Pumpe, welche Elektrolyt aus dem Tank fördert, Elektrolyt oberhalb des Elektrolytspiegels wieder dem Elektrolytbad zugeführt. Nach der Saugpumpe und vor dem Tank ist ein Gasabscheider angeordnet.

Es ist Aufgabe der Erfindung, ein verbessertes Verfahren zur Herstellung eines Werkstücks durch elektrochemisches Abtragen zu entwickeln, welches eine verbesserte Abtragung einhergehend mit einer erhöhten Betriebssicherheit aufweist und welches kostengünstig verwirklicht werden kann.

Die Aufgabe wird gelöst mit den Merkmalen des unabhängigen Anspruchs.

Weitere vorteilhafte Ausgestaltungen werden durch die abhängigen Ansprüche beschrieben.

Die Erfindung betrifft demnach ein Verfahren zur Herstellung eines Werkstücks durch elektrochemisches Abtragen eines Ausgangsmaterials, etwa eines Halbzeugs. Das Verfahren sieht vor, einen Reaktorraum zwischen einer bis dato ausgebildeten Oberfläche des Ausgangsmaterials, einer hohlzylinderförmigen Reaktorhülse und einem Werkzeug auszubilden.

Das Verfahren sieht ferner vor, eine der bis dato ausgebildeten Oberfläche des Ausgangsmaterials gegenüberliegende, dem zu behandelnden Ausgangsmaterial zugewandten Seite des Werkzeugs mit einer Negativform des herzustellenden Werkstücks auszustatten.

Das Verfahren sieht außerdem vor, dass das normal zur bis dato ausgebildeten Oberfläche des Ausgangsmaterials beispielsweise vertikal beweglich in der hohlzylinderförmigen Reaktorhülse angeordnete Werkzeug während des elektrochemischen Abtragens in gleichbleibendem Abstand zur mit zunehmendem elektrochemischen Abtragen zurückweichenden Oberfläche des Ausgangsmaterials in der hohlzylinderförmigen Reaktorhülse geführt gehalten wird.

Das Verfahren sieht weiterhin vor, während des elektrochemischen Abtragens den Reaktorraum zu durchspülen. Hierzu weist der Reaktorraum eine Einlass- und eine Auslassöffnung zur Durchströmung mit einem Elektrolyt während des elektrochemischen Abtragens auf. Hierzu kann der Reaktorraum Teil eines geschlossenen Kreislaufs sein, in dem während des elektrochemischen Abtragens ein Elektrolyt zirkuliert. Der Elektrolyt zirkuliert somit bevorzugt in einem geschlossenen Kreislauf, Teil dessen der Reaktorraum mit seiner Einlass- und Auslassöffnung ist.

Das Verfahren sieht darüber hinaus vor, dass in dem Reaktorraum ein Unterdruck gegenüber der Umgebung außerhalb des Reaktorraums herrscht.

Vorzugsweise sieht das Verfahren vor, dass ein Elektrolyt in einem den Reaktorraum umfassenden Kreislauf zirkuliert, in welchem Kreislauf eine kontinuierliche Filterung von beim elektrochemischen Abtragen in dem Elektrolyt entstehenden Schlamms stattfindet, nachdem der zirkullerende Elektrolyt den Reaktorraum verlassen hat und bevor der Elektrolyt erneut dem Reaktorraum zugeführt wird.

Das Verfahren sieht weiterhin vor, dass in dem Kreislauf eine Gasabscheidung stattfindet, nachdem der zirkulierende Elektrolyt den Reaktorraum verlassen hat und bevor der Elektrolyt erneut dem Reaktorraum zugeführt wird.

Der in dem Reaktorraum gegenüber der Umgebung außerhalb des Reaktorraums herschende Unterdruck wird bei der Gasabscheidung in dem Kreislauf durch Entnahme einer Gasphase außerhalb des Reaktorraums hergestellt.

Die genannten Maßnahmen dienen dem Erhalt einer verbesserten elektrochemischen Abtragung einhergehend mit einer erhöhten Betriebssicherheit und einer erhöhten Sicherheit beim Umgang sowie dem Aufenthalt in der Nähe von zum elektrochemischen Abtragen vorgesehenen Einrichtungen und Vorrichtungen. Ein besonders hervorzuhebender Vorteil ist hierbei darin zu sehen, dass die genannten, zum Erhalt einer verbesserten elektrochemischen Abtragung dienenden Maßnahmen durch gemeinsame Einrichtungen erhalten werden, nämlich: einem den Reaktorraum umfassenden Kreislauf, in dem der Elektrolyt zirkuliert, sowie in den nicht den Reaktorraum umfassenden Teilen des Kreislaufs durch hier angeordnete Einrichtungen vorzunehmende Maßnahmen zur Filterung, Gasabscheidung und gleichzeitigen Unterdruckerzeugung.

Die Erfindung kann verwirklicht werden anhand einer Vorrichtung zur Herstellung eines Werkstücks durch elektrochemisches Abtragen eines Ausgangsmaterials, etwa eines Halbzeugs, mit:
- einem Werkzeug, das auf seiner dem zu behandelnden Ausgangsmaterial zugewandten Seite eine Negativform des herzustellenden Werkstücks aufweist,
- einer hohlzylinderförmigen Reaktorhülse, in welcher das Werkzeug unter Einhaltung eines konstanten Abstands gegenüberliegend zu einer bis dato ausgebildeten Oberfläche des Ausgangsmaterials beispielsweise vertikal relativbeweglich geführt angeordnet ist,
- einem zwischen der hohlzylinderförmigen Reaktorhülse, dem Werkzeug und dem Ausgangsmaterial ausgebildeten Reaktorraum mit einer Einlass- und einer Auslassöffnung,
wobei:
- ein Elektrolyt durch die Einlassöffnung in den Reaktorraum hinein- und durch die Auslassöffnung wieder aus dem Reaktorraum herausströmt und
- in dem Reaktorraum ein Unterdruck gegenüber der Umgebung außerhalb des Reaktorraums herrscht.

Ein sich hierdurch ergebender Vorteil ist eine erhöhte Prozesssicherheit, da bei einer Havarie, sei es durch eine Erschütterung oder eine andere Ursache, bei der ein Leck des Reaktorraums entsteht, das Austreten umweltschädlichen und für die Gesundheit umstehender Personen unvorteilhaften Elektrolyts aus dem Reaktorraum verhindert wird.

Ein zusätzlicher Vorteil ist die Vermeidung einer Ablagerung von die Herstellung des Werkstücks nachteilig beeinträchtigenden Schlamms im Reaktorraum aufgrund der zur Erzeugung des Unterdrucks im Reaktorraum erforderlichen Zirkulation des Elektrolyts durch die Einlassöffnung in den Reaktorraum hinein und durch die Auslassöffnung wieder aus dem Reaktorraum heraus.

Weitere Vorteile gegenüber dem Stand der Technik sind:
- eine gleichmäßige Strömung,
- ein verbesserter kontinuierlicher Abtransport von Gas und abgetragenen Metallpartikeln,
- eine erhöhte Sicherheit bei unterschiedlichem Chemieeinsatz und
- durch ein angepasstes depotfreies Verteilersystem können unterschiedliche Elektrolyte und Spülen zum Einsatz kommen, einhergehend mit einer hohen Variabilität der Einsatzmöglichkeit der Vorrichtung.

Bevorzugt zirkuliert der Elektrolyt in einem geschlossenen Kreislauf, der über eine an die Einlassöffnung angeschlossene Zuleitung und über eine an die Auslassöffnung angeschlossene Ableitung mit dem Reaktorraum verbunden ist.

Der geschlossene Kreislauf kann einen in Zirkulationsrichtung des Elektrolyts gesehen zwischen Ableitung und Zuleitung angeordneten Filterraum und/oder einen Sedimentationsraum zur Abscheidung beim elektrochemischen Abtragen entstehenden Schlamms aufweisen.

Der geschlossene Kreislauf weist einen in Zirkulationsrichtung des Elektrolyts gesehen zwischen Ableitung und Zuleitung angeordneten Gasabscheider zur Abscheidung beim elektrochemischen Abtragen entstehender Gase auf.

Das Werkzeug ist bevorzugt aus Aluminium hergestellt. Unbehandeltes Aluminium bildet eine natürliche Oxidschicht aus, die an den verbleibenden Oberflächen des Werkzeugs isolierend für den während des elektrochemischen Abtragens fließenden elektrischen Strom ist. Werkzeuge aus Aluminium können im Vergleich zu Werkzeugen aus Stahl besonders wirtschaftlich hergestellt werden.

Alternativ kann das Werkzeug aus Titan oder beschichtetem Stahl hergestellt sein.

Aluminium und Titan eignen sich sowohl als gut elektrisch leitender Werkstoff, ebenso wie sie durch Oxidation eine elektrisch nicht leitende und/oder hoch isolierende Oberfläche aus Keramik und/oder Eloxal ausbilden. Darüber hinaus eignen sich Aluminium und Titan zur Beschichtung mit partiell hoch leitenden Oberflächen, welche sich als kathodisch gepolte Elektroden zur Abtragung gegenüber Stahl passiv verhalten und dadurch keine Partikel aufnehmen.

Zur Herstellung von Werkzeugen vorgesehenes Aluminium und Titan kann sowohl:
- stranggepresst,
- gegossen,
- geschmiedet,
- Laser gesintert
hergestellt und anschließend beschichtet werden.

Beschichtungen sind bevorzugt:
- Gold,
- Silber,
- Platin,
- Palladium,
- Chrom.

Ebenso ist denkbar, Werkzeuge als Inertelektroden aus Mischkristallen auszuführen.

Die die Negativform des herzustellenden Werkstücks bildenden Oberflächen des Werkzeugs sind elektrisch leitend ausgebildet.

Die verbleibenden Oberflächen des Werkzeugs können ganz oder teilweise elektrisch isolierend beschichtet, beispielsweise eloxiert, sein.
Zumindest die auf der dem zu behandelnden Ausgangsmaterial zugewandten Seite ausgebildete Negativform des Werkzeugs ist vorzugsweise elektrisch leitend beschichtet.

Besonders bevorzugt ist die auf der dem zu behandelnden Ausgangsmaterial zugewandten Seite ausgebildete Negativform des Werkzeugs mit Gold beschichtet. Gold ist abweisend gegenüber galvanisch abgetragenem Material. Dadurch ist die Negativform unveränderlich und maßtreu.

Das Ausgangsmaterial ist oder umfasst beispielsweise Stahl und/oder Kohlenstoffstahl und/oder austenitischen Stahl und/oder eine Nickelbasislegierung.

Bevorzugt herrscht zumindest im Reaktorraum ein Druck von 200mbar bis 900 mbar, besonders bevorzugt von 200 bis 500 mbar, so dass sich gegenüber der Umgebung ein entsprechender Unterdruck ergibt.

Sowohl die Vorrichtung als auch das Verfahren erlauben, alle zuvor beschriebenen Vorteile der Erfindung nutzbar zu machen.

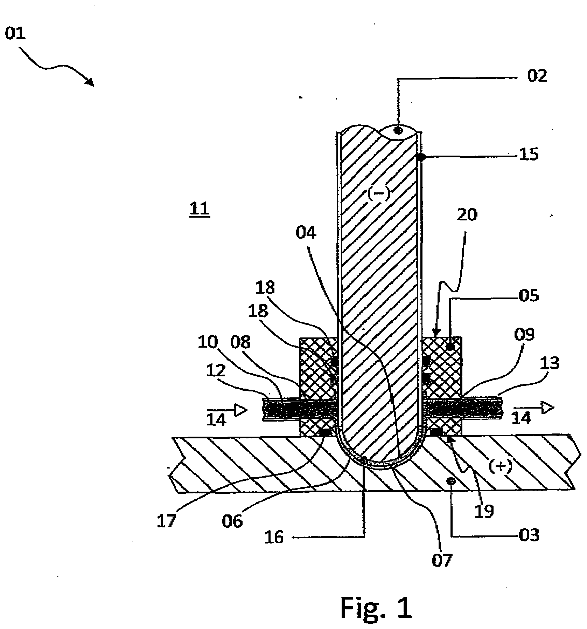

Die Erfindung wird nachfolgend anhand von in der Zeichnung dargestellten Ausführungsbeispielen näher erläutert. Die Größenverhältnisse der einzelnen Elemente zueinander in den Figuren müssen nicht immer den realen Größenverhältnissen entsprechen, da einige Formen vereinfacht und andere Formen zur besseren Veranschaulichung vergrößert im Verhältnis zu anderen Elementen dargestellt sein können. Für gleiche oder gleich wirkende Elemente der Erfindung werden Identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar. Die einzige Fig. 1 zeigt in schematischer Darstellung:
- ein Ausführungsbeispiel einer Vorrichtung zur Herstellung eines Werk-stücks durch elektrochemisches Abtragen eines Ausgangsmaterials in einem Querschnitt.

Eine In der Figur ganz oder in Teilen dargestellte Vorrichtung 01 umfasst:
- ein Werkzeug 02, das auf seiner dem zu behandelnden Ausgangsmaterial 03 zugewandten Seite eine Negativform 04 des herzustellenden Werkstücks aufweist,
- eine durch ein auf dem Ausgangsmaterial 03 absetzbares hülsenförmiges Gehäuse gebildete hohlzylinderförmige Reaktorhülse 05, in welcher das Werkzeug 02 unter Einhaltung eines konstanten Abstands gegenüberliegend der Negativform 04 zu einer bis dato ausgebildeten Oberfläche 06 des Ausgangsmaterials 03 vorzugsweise normal zu der gegenüberliegend der Negativform 04 bis dato ausgebildeten Oberfläche 06 des Ausgangsmaterials 03, beispielsweise vertikal, relativbeweglich geführt angeordnet ist,
- einen zwischen der hohlzylinderförmigen Reaktorhülse 05, dem Werkzeug 02 und dem Ausgangsmaterial 03 ausgebildeten Reaktorraum 07 mit mindestens einer Einlassöffnung 08 und mindestens einer Auslassöffnung 09.

Die hohlzylinderförmige Reaktorhülse 05 weist eine Zylinderachse und eine sich entlang dieser von einer dem Ausgangsmaterial 03 zugewandten ersten Stirnseite 19 zu einer gegenüberliegenden, dem Ausgangsmaterial 03 abgewandten zweiten Stirnselte 20 der Reaktorhülse 05 erstreckende zentrale Durchgangsöffnung auf.

Das Werkzeug 02 ist in der zentralen Durchgangsöffnung der Reaktorhülse 05 entlang einer mit der Zylinderachse übereinstimmenden Bearbeitungsachse beweglich geführt.

Die Reaktorhülse 05 ist bevorzugt auf dem Ausgangsmaterial 03 aufstehend angeordnet und/oder anordbar.

Vorzugsweise ist an einer dem Ausgangsmaterial 03 zugewandten ersten Stirnseite 19 eine um die zur Aufnahme des Werkzeugs 02 vorgesehene Durchgangsöffnung umlaufende Dichtung 17 - bevorzugt eine Axialdichtung - angeordnet, beispielsweise zumindest teilweise in diese eingelassen, welche die stirnseitige Anlage zwischen Reaktorhülse 05 und Ausgangsmaterial 03 vorzugsweise gasdicht abdichtet.

Am der Reaktorhülse 05 zugewandten Außenumfang des Werkzeugs 02 und/oder am dem Werkzeug 02 zugewandten Innenumfang der zentralen Durchgangsöffnung der Reaktorhülse 05 ist vorzugsweise zumindest eine umlaufende, die Zylinderachse vollständig umgebende, Dichtung 18 - bevorzugt eine Radialdichtung - vorgesehen, welche die radiale Anlage zwischen Außenumfang des Werkzeugs 02 und dem Innenumfang der zentralen Durchgangsöffnung der Reaktorhülse 05 vorzugsweise gasdicht abdichtet.

Wichtig ist hervorzuheben, dass die Erfindung eine durch Dichtungen 17, 18 gebildete Dichtungsanordnung für eine Vorrichtung zum elektrochemischen Abtragen umfassen kann.

Die hohlzylinderförmige Reaktorhülse 05 kann als gerader oder schiefer Hohlzylinder mit einem einem normal zur Bearbeitungsachse verlaufenden Querschnitt des Ausgangsmaterials 03 in mathematischem Sinne ähnlichen normal zur Zylinderachse verlaufenden Querschnitt deren zentraler Durchgangsöffnung ausgebildet sein.

Die zentrale Durchgasngsöffnung kann über die Höhe der Reaktorhülse 05 entlang der Zylinderachse gesehen hinweg konstanten Querschnitt aufweisen. Alternativ kann sich der Querschnitt zu der ersten Stirnseite hin erweitern, beispielsweise sprunghaft. Eine solche Erweiterung vergrößert das Volumen des zwischen der Reaktorhülse 05, dem Werkzeug 02 und dem Ausgangsmaterial 03 ausgebildeten Reaktorraums 07.

Ein Elektrolyt 10 strömt zumindest während des elektrochemischen Abtragens durch die Einlassöffnung 08 in den Reaktorraum 07 hinein und durch die Auslassöffnung 09 wieder aus dem Reaktorraum 07 heraus. Hierdurch findet eine Durchströmung einhergehend mit einer permanenten Durchspülung des Reaktorraums 07 statt, wodurch Ablagerungen von das elektrochemische Abtragen beeinträchtigenden Schlamms vermieden werden,

In dem Reaktorraum 07 herrscht Unterdruck gegenüber einer Umgebung 11 außerhalb des Reaktorraums 07. Hierdurch wird einerseits schädlichen Folgen einer Havarie vorgebeugt, da bei einem Leck kein Elektrolyt 10 oder keine andere Chemikalie aus dem Reaktorraum 07 spritzt, und andererseits während des störungsfreien Betriebs der Reaktor 05 durch den Umgebungsdruck zusätzlich an das Ausgangsmaterial 03 angepresst wird, einhergehend mit einer erhöhten Abdichtung und einer hohen Prozesssicherheit.

Bevorzugt herrscht zumindest Im Reaktorraum 07 ein Druck von 200 mbar bis 900 mbar, besonders bevorzugt von 200 mbar bis 500 mbar, so dass sich gegenüber der Umgebung ein entsprechender Unterdruck ergibt.

Der Reaktorraum 07 kann Teil eines geschlossenen Kreislaufs sein, in dem während des elektrochemischen Abtragens ein Elektrolyt zirkuliert. Der Elektrolyt zirkuliert somit bevorzugt in einem geschlossenen Kreislauf, Teil dessen der Reaktorraum mit seiner Einlass- und Auslassöffnung ist.

Die Vorrichtung 01 eignet sich zur Durchführung eines Verfahrens zur Herstellung eines Werkstücks durch elektrochemisches Abtragen eines Ausgangsmaterials 03, etwa eines Halbzeugs, umfassend die Verfahrensschritte:
- Ausbildung eines Reaktorraums 07 zwischen einer bis dato ausgebildeten Oberfläche 06 des Ausgangsmaterials 03, einer beispielsweise durch ein hülsenförmiges Gehäuse gebildeten hohlzylinderförmigen Reaktorhülse 05 und einem in der hohlzylinderförmigen Reaktorhülse 05 beweglich geführt angeordneten und gegenüber der hohlzylinderförmigen Reaktorhülse 05 und dem Ausgangsmaterial 03 elektrisch isolierten Werkzeug 02,
- Ausstattung einer der bis dato ausgebildeten Oberfläche 06 des Ausgangsmaterials 03 gegenüberliegenden, dem zu behandelnden Ausgangsmaterial 03 zugewandten Seite des Werkzeugs 02 mit einer Negativform 04 des herzustellenden Werkstücks oder einer Partie des Werkstücks,
- Starten des elektrochemischen Abtragens durch Anlegen einer Spannung an das Ausgangsmaterial 03 und an das Werkzeug 02, wobei das Werkzeug 02 hierbei als Kathode gepolt ist,
- Durchspülung des Reaktorraums 07 während des elektrochemischen Abtragens vermittels Durchströmung mit einem Elektrolyt 10,
- Bewegung des in der hohlzylinderförmigen Reaktorhülse 05 beweglich geführt angeordneten Werkzeugs 02 beispielsweise normal, beispielsweise vertikal, in gleichbleibendem Abstand zur mit zunehmendem elektrochemischen Abtragen zurückweichenden Oberfläche 06 des Ausgangsmaterials 03 während des elektrochemischen Abtragens,
wobei:
- zumindest während des elektrochemischen Abtragens in dem Reaktorraum 07 Unterdruck gegenüber einer Umgebung 11 außerhalb des Reaktorraums 07 herrscht.

Die Vorrichtung und/oder das Verfahren weisen u.a. die nachfolgend angeführten Merkmale auf:
- ein Elektrolyt zirkuliert in einem den Reaktorraum 07 umfassenden Kreislauf, in welchem Kreislauf eine kontinuierliche Filterung von beim elektrochemischen Abtragen in dem Elektrolyt entstehenden Schlamms stattfindet, nachdem der zirkulierende Elektrolyt den Reaktorraum 07 verlassen hat und bevor der Elektrolyt erneut dem Reaktorraum 07 zugeführt wird.
- ein Elektrolyt zirkuliert in einem den Reaktorraum 07 umfassenden Kreislauf, in welchem Kreislauf eine Gasabscheidung stattfindet, nachdem der zirkulierende Elektrolyt den Reaktorraum 07 verlassen hat und bevor der Elektrolyt erneut dem Reaktorraum 07 zugeführt wird.
- ein in dem Reaktorraum 07 gegenüber einer Umgebung 11 außerhalb des Reaktorraums 07 herrschender Unterdruck wird bei der Gasabscheidung in dem Kreislauf durch Entnahme einer Gasphase außerhalb des Reaktorraums 07 hergestellt.

Der Elektrolyt 10 zirkuliert bevorzugt in einem geschlossenen Kreislauf, der den Reaktorraum 07 über eine an die Einlassöffnung 08 angeschlossene Zuleitung 12 und über eine an die Auslassöffnung 09 angeschlossene Ableitung 13 umfasst.

Der geschlossene Kreislauf kann einen in durch Pfeile angedeuteten Zirkulationsrichtung 14 des Elektrolyts 11 gesehen zwischen Ableitung 13 und Zuleitung 12 angeordneten Filterraum und/oder einen Sedimentationsraum zur Abscheidung beim elektrochemischen Abtragen entstehenden Schlamms aufweisen.

Der geschlossene Kreislauf kann einen in Zirkulationsrichtung 14 des Elektrolyts 11 gesehen zwischen Ableitung 13 und Zuleitung 12 angeordneten Gasabscheider zur Abscheidung beim elektrochemischen Abtragen entstehender Gase aufweisen.

Der in dem Reaktorraum 07 gegenüber einer Umgebung 11 außerhalb des Reaktorraums 07 herrschende Unterdruck wird durch Entnahme einer in dem Gasabscheider abgeschiedenen Gasphase aus dem Gasabscheider hergestellt.

Die die Negativform 04 des herzustellenden Werkstücks bildenden Oberflächen des Werkzeugs 02 sind elektrisch leitend ausgebildet.

Die verbleibenden Oberflächen des Werkzeugs 02, welche nicht die Negativform 04 des herzustellenden Werkstücks bilden, können ganz oder teilweise elektrisch isolierend beschichtet, beispielsweise eloxiert, sein. Die elektrisch isolierende Beschichtung kann beispielsweise eine natürliche Oxid- und/oder Keramikschicht 15 des Werkstoffs des Werkzeugs 02 umfassen.

Zumindest die auf der dem zu behandelnden Ausgangsmaterial 03 zugewandten Seite des Werkzeugs 02 ausgebildete Negativform 04 kann elektrisch leitend beschichtet sein.

Die auf der dem zu behandelnden Ausgangsmaterial 03 zugewandten Seite des Werkzeugs 02 ausgebildete Negativform 04 kann beispielsweise mit einer elektrisch leitenden Beschichtung 16 aus Gold und/oder Silber und/oder Platin und/oder Palladium und/oder Chrom versehen sein.

Das Werkzeug 02 kann aus Aluminium, aus Titan oder aus beschichtetem Stahl hergestellt sein.

Aluminium und Titan eignen sich sowohl als gut elektrisch leitender Werkstoff, ebenso wie sie durch Oxidation eine elektrisch nicht leitende und/oder hoch isolierende Oberfläche aus Keramik und/oder Eloxal ausbilden. Darüber hinaus eignen sich Aluminium und Titan zur Beschichtung mit partiell hoch leitenden Oberflächen, welche sich als kathodisch gepolte Elektroden zur Abtragung gegenüber Stahl passiv verhalten und dadurch keine Partikel aufnehmen.

Gegebenenfalls für das Werkzeug 02 vorgesehenes Aluminium und Titan kann:
- stranggepresst und/oder
- gegossen und/oder
- geschmiedet und/oder
- Laser gesintert
hergestellt und anschließend beschichtet sein.

Alternativ oder zusätzlich kann das Werkzeug 02 als Inertelektrode aus Mischkristallen ausgeführt sein.

Das Ausgangsmaterial 03 kann beispielsweise Stahl und/oder Kohlenstoffstahl und/oder austenitischer Stahl und/oder eine Nickelbasislegierung sein oder umfassen.

Wichtig ist hervorzuheben, dass in dem Reaktorraum 07 nacheinander durch Einbringung verschiedener flüssiger und/oder pastöser und/oder gasförmiger Substanzen verschiedene Oberflächenbehandlungen nacheinander durchgeführt werden können, ohne dass der Reaktor 05 oder das Werkzeug 02 entfernt werden müssen.

Bei der vorgeschlagenen Erfindung können auch säure- bzw. laugenhaltige Lösungen eingesetzt werden. Bevorzugt können Säuren wie z. B. Schwefelsäure, Chromsäure, Phosphorsäure u. a. sowie alkalische Lösungen wie Natronlauge eingesetzt werden.

Ein weiterer Vorteil der Erfindung besteht darin, dass nicht nur die Abtraggeschwindigkeit erhöht werden kann, sondern auch die Qualität des Produkts, da ein besseres Abtragen z. B. Aluminium- und Kupferlegierungen möglich ist.

Darüber hinaus können das Verfahren und/oder die Vorrichtung einzelne oder eine Kombination von einleitend zum Stand der Technik erwähnten Merkmalen und/oder in einleitend erwähnten Dokumenten zum Stand der Technik enthaltene Merkmale aufweisen.

Die Erfindung ist nicht durch die Beschreibung anhand der Ausführungsbeispiele beschränkt.

Die Erfindung ist insbesondere im Bereich der Herstellung von metallischen Werkstücken gewerblich anwendbar.

### Bezugszeichenliste

- 01: Vorrichtung
- 02: Werkzeug
- 03: Ausgangsmaterial
- 04: Negativform
- 05: Reaktorhülse
- 06: gegenüberliegend der Negativform 04 bis dato ausgebildete Oberfläche des Ausgangsmaterials 03
- 07: Reaktorraum
- 08: Einlassöffnung
- 09: Auslassöffnung
- 10: Elektrolyt
- 11: Umgebung
- 12: Zuleitung
- 13: Ableitung
- 14: Zirkulationsrichtung
- 15: Oxid- und/oder Keramikschicht
- 16: elektrisch leitende Beschichtung
- 17: Dichtung
- 18: Dichtung
- 19: erste Stirnseite
- 20: zweite Stirnseite

## Patentansprüche

1. Verfahren zur Herstellung eines Werkstücks durch elektrochemisches Abtragen eines Ausgangsmaterials (03),
umfassend die Verfahrensschritte:
- Ausbildung eines Reaktorraums (07) zwischen einer bis dato ausgebildeten Oberfläche (06) des Ausgangsmaterials (03), einer hohlzylinderförmigen Reaktorhülse (05) und einem in der Reaktorhülse (05) beweglich geführt angeordneten Werkzeug (02),
- Ausstattung einer der bis dato ausgebildeten Oberfläche (06) des Ausgangsmaterials (03) gegenüberliegenden, dem zu behandelnden Ausgangsmaterial (03) zugewandten Seite des Werkzeugs (02) mit einer Negativform (04) des herzustellenden Werkstücks,
- Bewegung des in der Reaktorhülse (05) beweglich geführt angeordneten Werkzeugs (02) in gleichbleibendem Abstand zur mit zunehmendem elektrochemischen Abtragen zurückweichenden Oberfläche (06) des Ausgangsmaterials (03) während des elektrochemischen Abtragens,
**dadurch gekennzeichnet, dass**:
- zumindest während des elektrochemischen Abtragens in dem Reaktorraum (07) Unterdruck gegenüber einer Umgebung (11) außerhalb des Reaktorraums (07) herrscht,
- ein Elektrolyt in einem den Reaktorraum umfassenden Kreislauf zirkuliert, in welchem Kreislauf eine Gasabscheidung stattfindet, nachdem der Elektrolyt den Reaktorraum verlassen hat und bevor der Elektrolyt erneut dem Reaktorraum (07) zugeführt wird, und
- der in dem Reaktorraum (07) gegenüber einer Umgebung (11) außerhalb des Reaktorraums (07) herrschende Unterdruck bei der Gasabscheidung in dem Kreislauf durch Entnahme einer Gasphase außerhalb des Reaktorraums hergestellt wird.

2. Verfahren nach Anspruch 1,
wobei ein Elektrolyt in einem den Reaktorraum umfassenden Kreislauf zirkuliert, in welchem Kreislauf eine kontinuierliche Filterung von beim elektrochemischen Abtragen in dem Elektrolyt entstehenden Schlamms stattfindet, nachdem der Elektrolyt den Reaktorraum verlassen hat und bevor der Elektrolyt erneut dem Reaktorraum (07) zugeführt wird.

## Claims

1. A method for producing a workpiece by electrochemical removal of a starting material (03),
including the method steps of:
- embodying a reactor chamber (07) among a thus-far embodied surface (06) of the starting material (03), a hollow-cylindrical reactor tube (05), and a tool (02), located movably guided in the reactor tube (05);
- equipping a side of the tool (02), opposite the thus-far embodied surface (06) of the starting material (03) and facing toward the starting material (03) to be treated, with a negative form (04) of the workpiece to be produced;
- moving the tool (02), located movably guided in the reactor tube (05), at a constant spacing from the surface (06) of the starting material (03), which surface recedes with increasing electrochemical removal, during the electrochemical removal,
**characterized in that**:
- at least during the electrochemical removal, negative pressure, relative to an environment (11) outside the reactor chamber (07), prevails in the reactor chamber (07);
- an electrolyte circulates in a circular motion that includes the reactor chamber, in which circular motion a vapor deposition takes place, once the electrolyte has left the reactor chamber and before the electrolyte is re-delivered to the reactor chamber (07); and
- the negative pressure prevailing in the reactor chamber (07) relative to an environment (11) outside the reactor chamber (07) is established, in the vapor deposition in the circular motion, by withdrawal of a gas phase outside the reactor chamber.

2. The method of claim 1, wherein an electrolyte circulates in a circular motion throughout the reactor chamber, in which circular motion a continuous filtration of sludge produced in the electrochemical deposition in the electrolyte takes place, once the electrolyte has left the reactor chamber and before the electrolyte is re-delivered to the reactor chamber (07).

## Revendications

1. Dispositif en vue de la production d'objets par le biais de l'enlèvement électrochimique d'un matériel de sortie (03),
Englobant les étapes du processus suivantes,
- Formation d'un espace de réacteur (07) entre la surface actuelle formée (06) par du matériel de sortie (03) d'une gaine du réacteur en forme cylindrique creuse (05) et d'un instrument disposé à titre mobile dans la gaine du réacteur (02),
- Equipement d'une surface actuelle formée (06) par du matériel de sortie (3) opposant le matériel de sortie à traiter (03) tourné vers l'instrument (02) présentant une forme négative (04) de l'instrument à produire,
- Instrument disposé en mouvement dans la gaine du réacteur (05) en distance uniforme avec l'enlèvement électrochimique progressif de la surface reculante (06) du matériel de sortie (03) pendant l'enlèvement électrochimique,
Est caractérisé de sorte qu'
- au minimum une sous-pression prévaut lors de l'enlèvement électrochimique dans l'espace du réacteur (07) opposant l'environnement (11) à l'extérieur de l'espace du réacteur (7).
- Un électrolyte circule au sein d'un circuit comprenant l'espace du réacteur où le recadrage du gaz a lieu après que l'électrolyte ait quitté l'espace du réacteur avant que l'électrolyte ait alimenté à nouveau l'espace du réacteur.
- la sous-pression prédominante dans l'espace du réacteur (07) en face de l'environnement en dehors de l'espace du réacteur (07) pendant le recadrage du gaz où le circuit produit une phase gazique en dehors de l'espace du réacteur par le biais du prélèvement.

2. Procédé correspondant à la revendication 1,
Où un électrolyte circule au sein d'un circuit englobant l'espace du réacteur où une filtration continue du circuit ait lieu lors de l'enlèvement électrochimique au sein de la boue produite par l'électrolyte après que l'électrolyte ait quitté l'espace du réacteur et avant que l'électrolyte ait alimenté à nouveau l'espace du réacteur (07).
